# EUROPÄISCHE PATENTANMELDUNG

(11) **EP 3 375 652 A1**
(43) Veröffentlichungstag der Anmeldung: **19.09.2018**
(21) Anmeldenummer: 18160302.8
(22) Anmeldetag: 06.03.2018
(51) Int. Cl.: B60K 15/03

(54) **FLÜSSIGKEITSTANK MIT EINER KUNSTSTOFFHÜLLE**

(30) Priorität: 14.03.2017 DE 102017105395
(71) Anmelder: VERITAS AG, 63571 Gelnhausen (DE)
(72) Erfinder: MOH, Wilfried, 69242 Mühlhausen (DE); RÖSCH, Thomas, 63589 Linsengericht (DE)
(74) Vertreter: Patentship Patentanwaltsgesellschaft mbH

(57) **Zusammenfassung**

Die vorliegende Erfindung betrifft einen Flüssigkeitstank (100) zur Aufnahme von Flüssigkeit in einem Kraftfahrzeug, mit einer Flüssigkeitstankschale (101), welche einen Innenraum (103) des Flüssigkeitstanks (100) umschließt; einem Heizkörper (107), welcher in dem Innenraum (103) des Flüssigkeitstanks (100) angeordnet ist, und ausgebildet ist, die Flüssigkeit in dem Flüssigkeitstank (100) zu erwärmen; und einer Kunststoffhülle (109), welche den Heizkörper (107) zumindest abschnittsweise umhüllt.

## Beschreibung

Die vorliegende Erfindung betrifft einen Flüssigkeitstank mit einer Kunststoffhülle in einem Kraftfahrzeug. Die vorliegende Erfindung betrifft insbesondere einen Harnstofftank zur Aufnahme einer wässrigen Harnstoff-Lösung mit einem Heizkörper und mit einer Kunststoffhülle in einem Kraftfahrzeug.

Um die Emission von Stickoxiden beim Betrieb von Verbrennungsmotoren, insbesondere Dieselmotoren, in einem Kraftfahrzeug zu reduzieren, wird das Verfahren der selektiven katalytischen Reduktion (SCR) angewendet, wobei wässrige Harnstofflösung einem Abgasstrang des Kraftfahrzeugs zugeführt wird. Die bereitzustellende Harnstofflösung kann hierbei in einem Flüssigkeitstank aufgenommen werden. Da der Gefrierpunkt der hierbei verwendeten Harnstofflösung bei ca. -11 °C liegt, muss die Harnstofflösung im Flüssigkeitstank bei geringen Außentemperaturen beheizt werden, um ein Gefrieren der Harnstofflösung zu verhindern. Aus diesem Grund können innerhalb eines Flüssigkeitstanks Heizkörper positioniert werden, um die Harnstofflösung zu erwärmen. Jedoch ist das Einbringen von Heizkörpern in einen Innenraum des Flüssigkeitstanks durch die Geometrie des Flüssigkeitstanks und die Montagemöglichkeiten beschränkt und der Heizkörper kann durch die Harnstofflösung in dem Flüssigkeitstank beschädigt werden.

Die Druckschrift DE 8 615 526 U1 beschreibt einen Brennstofftank aus Kunststoff für Fahrzeuge. Der Brennstofftank umfasst zwei Halbschalen, die entsprechend eine obere Halbschale und eine untere Bodenhalbschale des Brennstofftanks bilden. Der Brennstofftank weist jedoch keinen Heizkörper zum Erwärmen des Brennstofftanks auf.

Es ist die der Erfindung zugrundeliegende Aufgabe, einen Flüssigkeitstank mit einem Heizkörper anzugeben, welcher vorteilhaft an dem Flüssigkeitstank angeordnet ist.

Diese Aufgabe wird durch den Gegenstand mit den Merkmalen nach dem unabhängigen Anspruch gelöst. Vorteilhafte Ausführungsformen der Erfindung sind Gegenstand der Figuren, der Beschreibung und der abhängigen Ansprüche.

Gemäß einem Aspekt der Erfindung wird die Aufgabe durch einen Flüssigkeitstank zur Aufnahme von Flüssigkeit in einem Kraftfahrzeug gelöst, mit einer Flüssigkeitstankschale, welche einen Innenraum des Flüssigkeitstanks umschließt, einem Heizkörper, welcher in dem Innenraum des Flüssigkeitstanks angeordnet ist, und ausgebildet ist, die Flüssigkeit in dem Flüssigkeitstank zu erwärmen, und einer Kunststoffhülle, welche den Heizkörper zumindest abschnittsweise umhüllt.

Der Flüssigkeitstank ist insbesondere als ein Harnstofftank zur Aufnahme einer wässrigen Harnstofflösung ausgebildet und umfasst insbesondere einen Additiv-Tank oder einen SCR-Tank.

Durch den in dem Flüssigkeitstank angeordneten Heizkörper wird der technische Vorteil erreicht, dass die Flüssigkeitstankschale und damit die sich in dem Flüssigkeitstank befindende Flüssigkeit wirksam erwärmt werden kann. Die in dem Innenraum des Kunststofftanks angeordnete Kunststoffhülle umschließt den Heizkörper zumindest abschnittsweise und schützt den Heizkörper somit vor der Flüssigkeit, insbesondere der Harnstofflösung in den Flüssigkeitstank. Der Heizkörper kann derart vorteilhaft in dem Innenraum des Flüssigkeitstanks angeordnet werden, dass eine wirksame Zuführung von Wärme zu der Flüssigkeit sichergestellt werden, um ein Einfrieren der Flüssigkeit zu verhindern, bzw. um eine Eisdecke auf der Flüssigkeitsoberfläche vorteilhaft aufzutauen und damit eine wirksame Belüftung des Flüssigkeitstanks zu ermöglichen.

Dadurch, dass der Heizkörper in dem Innenraum des Heizkörpers angeordnet ist, müssen elektrische Leitungen zum Zuführen von elektrischer Energie zu dem Heizkörper nicht durch die Flüssigkeitstankschale geführt werden, wodurch eine besonders flüssigkeitsdichte Flüssigkeitstankschale bereitgestellt werden kann. Zudem kann die Größe und die Heizleistung des Heizkörpers, sowie die entsprechende Größe der Kunststoffhülle vorteilhaft an die Geometrie des Flüssigkeitstanks angepasst werden.

In einer vorteilhaften Ausführungsform sind die Flüssigkeitstankschale und die Kunststoffhülle aus Kunststoff gebildet, wobei die Kunststoffhülle mit der Flüssigkeitstankschale stoffschlüssig verbunden, insbesondere verschweißt, ist.

Dadurch wird beispielsweise der technische Vorteil erreicht, dass eine besonders wirksame und stabile Befestigung der Kunststoffhülle an der Flüssigkeitstankschale sichergestellt wird, wodurch der Heizkörper durch die Kunststoffhülle wirksam an der Flüssigkeitstankschale hält.

In einer weiteren vorteilhaften Ausführungsform sind die Kunststoffhülle und die Flüssigkeitstankschale einstückig ausgebildet.

Dadurch wird beispielsweise der technische Vorteil erreicht, dass durch die einstückige Ausbildung, die Flüssigkeitstankschale und die Kunststoffhülle als gemeinsames Bauteil hergestellt werden können. Die Form der Kunststoffhülle muss hierbei nur an die Form des Heizkörpers angepasst werden, und der Heizkörper kann anschließend in den Flüssigkeitstank eingebracht werden und wirksam durch die Kunststoffhülle umhüllt werden.

In einer weiteren vorteilhaften Ausführungsform weist der Heizkörper eine Außenwandung, insbesondere eine metallische Außenwandung, auf, welche mit der Kunststoffhülle kraftschlüssig, formschlüssig und/oder stoffschlüssig verbunden ist.

Dadurch wird beispielsweise der technische Vorteil erreicht, dass der Heizkörper wirksam in die Kunststoffhülle gefügt werden kann, und dass durch die kraftschlüssige, formschlüssige und/oder stoffschlüssige Verbindung zwischen dem Heizkörper und der Kunststoffhülle der Heizkörper wirksam in der Kunststoffhülle gehalten wird. Insbesondere kann die Kunststoffhülle auf die Außenwandung des Heizkörpers aufgespritzt werden, um sicherzustellen, dass der Heizkörper durch die Kunststoffhülle wirksam umschlossen ist.

In einer weiteren vorteilhaften Ausführungsform sind an der Außenwandung eine Mehrzahl an Rippen angeordnet, welche eine Mehrzahl an Rillen an der Außenwandung begrenzen, wobei die Rippen und Rillen eine wirksame Verbindung zwischen der Außenwandung und der Kunststoffhülle bereitzustellen.

Dadurch wird beispielsweise der technische Vorteil erreicht, dass die Rippen und Rillen sicherstellen, dass die Kunststoffhülle wirksam auf die Außenwandung aufgetragen werden kann. Hierbei kann flüssiger Kunststoff an der Außenwandung durch die von Rippen begrenzten Rillen strömen und sich gleichmäßig an der Außenwandung verteilen, und anschließend vorteilhaft abkühlen, um eine homogene Kunststoffhülle auszubilden.

In einer weiteren vorteilhaften Ausführungsform weist eine dem Innenraum des Flüssigkeitstanks zugewandte Innenwandung der Flüssigkeitstankschale eine Aufnahmekontur auf, welche ausgebildet ist, den Heizkörper aufzunehmen, wobei die Aufnahmekontur insbesondere als eine Vertiefung oder als ein Hohlraum in der Innenwandung ausgebildet ist.

Dadurch wird beispielsweise der technische Vorteil erreicht, dass die Aufnahmekontur an der Innenwandung des Flüssigkeitstanks eine besonders wirksame Befestigung des Heizkörpers an der Innenwandung der Flüssigkeitstankschale sicherstellt. Hierbei kann beispielweise die Aufnahmekontur als eine Vertiefung oder als ein Hohlraum ausgebildet sein, dessen Geometrie an die Form des Heizkörpers vorteilhaft angepasst werden kann, um den Heizkörper in der Aufnahmekontur wirksam aufzunehmen.

In einer weiteren vorteilhaften Ausführungsform ist der Heizkörper in die Aufnahmekontur einschnappbar oder einpressbar, wobei durch das Einschnappen oder Einpressen des Heizkörpers in die Aufnahmekontur eine kraftschlüssige und/oder formschlüssige Verbindung zwischen dem Heizkörper und der Aufnahmekontur gebildet wird.

Dadurch wird beispielsweise der technische Vorteil erreicht, dass ein besonders stabiler und spaltfreier Übergang zwischen dem Heizkörper und der Flüssigkeitstankschale erreicht werden kann, so dass eine wirksame Wärmeübertragung sichergestellt wird. Zum einen kann sich die Aufnahmekontur beim Einführen des Heizkörpers hierbei elastisch aufbiegen und anschließend der Heizkörper in die Aufnahmekontur einschnappen oder eingepresst werden, wodurch die Aufnahmekontur den Heizkörper im Rahmen einer kraftschlüssigen und/oder formschlüssigen Verbindung gehalten wird.

In einer weiteren vorteilhaften Ausführungsform weist der Heizkörper ein elektrisches Heizelement zum Erwärmen des Heizkörpers auf, wobei das elektrische Heizelement insbesondere ein elektrisches Widerstandsheizelement, einen PTC-Körper und/oder eine PTC-Folie umfasst.

Dadurch wird beispielsweise der technische Vorteil erreicht, dass ein elektrisches Heizelement eine wirksame Wärmezufuhr bereitstellt, damit der Heizkörper die Flüssigkeit in dem Flüssigkeitstank erwärmen kann. Ein elektrisches Widerstandsheizelement stellt eine wirksame Wärmequelle bereit. Ein PTC-Körper kann hierbei ein besonders kompakt ausgebildetes elektrisches Heizelement verwirklichen und beispielsweise eine Kunststoffverschalung aufweisen. Eine PTC-Folie kann hier ein elektrisches Heizelement verwirklichen, dass an eine Innenkontur des Heizkörpers vorteilhaft angepasst werden kann und folglich in dem Heizkörper vorteilhaft verlegt werden kann.

In einer weiteren vorteilhaften Ausführungsform weist der Heizkörper einen Heizkörperinnenraum auf, welcher ausgebildet ist das elektrische Heizelement aufzunehmen, wobei das elektrische Heizelement durch eine Heizkörperöffnung des Heizkörpers in den Heizkörperinnenraum einführbar ist, um das elektrische Heizelement in dem Heizkörper zu positionieren, wobei die Heizkörperöffnung insbesondere einen Außenbereich des Flüssigkeitstanks mit dem Heizkörperinnenraum verbindet, wobei die Heizkörperöffnung durch einen Heizkörperverschluss verschließbar ist, und wobei insbesondere an der Heizkörperöffnung und/oder an dem Heizkörperverschluss zumindest ein Isolationselement angeordnet ist.

Dadurch wird beispielsweise der technische Vorteil erreicht, dass das elektrische Heizelement durch die Heizkörperöffnung besonders vorteilhaft in den Heizkörperinnenraum eingeführt und in dem Heizkörperinnenraum positioniert werden kann. Hierbei durchbricht die Heizkörperöffnung insbesondere die Flüssigkeitstankschale und verbindet dadurch den Außenbereich des Flüssigkeitstanks mit dem Heizkörperinnenraum, so dass das Heizelement von außen durch die Heizkörperöffnung in den Heizkörperinnenraum eingeführt werden kann. Nach dem Einführen des elektrischen Heizelements wird die Heizkörperöffnung durch einen Heizkörperschluss, z.B. durch einen Deckel, verschlossen, insbesondere flüssigkeitsdicht verschlossen, damit der Heizkörperinnenraum vor äußeren Umwelteinflüssen, z.B. Flüssigkeit, wirksam geschützt ist. Ein Isolationselement, wie z.B. eine Wärmedämmung, oder mehrere Isolationselemente kann hierbei im Heizkörperinnenraum an der Heizkörperöffnung und/oder an dem Heizkörperverschluss positioniert werden, um eine unkontrollierten Abfuhr von Wärme an der Heizkörperöffnung zu verhindern.

In einer weiteren vorteilhaften Ausführungsform weist der Heizkörper ein Federelement auf, welches ausgebildet ist, das elektrische Heizelement mit Kraft zu beaufschlagen, um das elektrische Heizelement an eine Außenwandung des Heizkörpers zu drücken.

Dadurch wird beispielsweise der technische Vorteil erreicht, dass das Federelement das elektrische Heizelement derart vorteilhaft an die Außenwandung des Heizkörpers drückt, dass keine Luftspalten zwischen dem elektrischen Heizelement und der Außenwandung des Heizkörpers entstehen können, welche eine wirksame Wärmeabgabe durch den Heizkörper beeinträchtigen können.

In einer weiteren vorteilhaften Ausführungsform weist der Heizkörper zumindest ein Wärmeleitelement auf, um eine wärmeleitende Verbindung zwischen dem elektrischen Heizelement und einer Außenwandung des Heizkörpers bereitzustellen, wobei das Wärmeleitelement insbesondere ein Wärmeleitblech oder eine Wärmleitfolie umfasst.

Dadurch wird beispielsweise der technische Vorteil erreicht, dass durch das zumindest eine Wärmeleitelement eine wirksame Wärmeübertragung von dem elektrischen Heizelement auf die Außenwandung sichergestellt wird. Beispielsweise kann das zumindest eine Wärmeleitblech ein metallisches Messing-, Kupfer-, oder Aluminium-Wärmeleitblech umfassen, welches an dem elektrischen Heizelement angeordnet ist und ausgebildet ist, von dem elektrischen Heizelement abgegebene Wärme wirksam aufzunehmen, und dadurch besonders wirksam von dem elektrischen Heizelement abzuleiten. Beispielsweise kann eine oder mehrere Wärmeleitfolien zwischen dem elektrischen Heizelement und der Außenwandung oder zwischen einem oder mehreren Wärmeleitblechen und/oder der Außenwandung angeordnet sein. Die zumindest eine Wärmleitfolie stellt eine wirksame Wärmeübertragung von dem elektrischen Heizelement durch den Heizkörper zu der Außenwandung sicher. Hierbei kann der Heizkörper insbesondere eine Sandwich-Struktur aufweisen, bei der mehrere Wärmeleitbleche und/oder mehrere Wärmleitfolien zwischen dem elektrischen Heizelement und der Außenwandung angeordnet sind, um Wärme wirksam durch den Heizkörper zu leiten.

In einer weiteren vorteilhaften Ausführungsform weist der Heizkörper ein Wärmeleitmedium auf, welches zwischen dem elektrischen Heizelement und dem Wärmeleitelement angeordnet ist, um eine wärmeleitende Verbindung zwischen dem elektrischen Heizelement und der Außenwandung des Heizkörpers bereitzustellen, und wobei das Wärmeleitmedium insbesondere eine Wärmeleitfolie, eine Wärmeleitflüssigkeit oder eine Wärmeleitpaste umfasst.

Dadurch wird beispielsweise der technische Vorteil erreicht, dass das Wärmeleitmedium eine besonders wirksame und kompakte wärmeleitende Anordnung innerhalb des Heizkörpers sicherstellt. Da das Wärmeleitmedium insbesondere eine Wärmeleitflüssigkeit oder eine Wärmeleitpaste umfasst, kann das Wärmeleitmedium nicht-wärmeleitfähige Spalten zwischen dem elektrischen Heizelement und der Außenwandung auffüllen und so eine besonders wirksame Wärmeübertragung innerhalb des Heizkörpers sicherstellen. Hierbei kann das Wärmeleitmedium insbesondere zwischen unterschiedlichen oder einer Vielzahl von verschiedenen Schichten in dem Heizkörper angeordnet sein, z.B. zwischen dem elektrischen Heizelement, dem einen oder mehreren Wärmeleitelementen, wie z.B. Wärmleitblechen, Wärmeleitfolien und/oder Außenwandung.

In einer weiteren vorteilhaften Ausführungsform weist der Flüssigkeitstanks ein Pumpenmodul zum Abpumpen von Flüssigkeit aus dem Flüssigkeitstank auf, wobei das Pumpenmodul im Innenraum des Flüssigkeitstanks angeordnet ist, und wobei das Pumpenmodul einen weiterer Heizkörper zum Erwärmen des Pumpenmoduls und/oder der Flüssigkeitstankschale aufweist.

Dadurch wird beispielsweise der technische Vorteil erreicht, dass durch den weiteren Heizkörper ein wirksames Erwärmen des Pumpenmoduls sichergestellt wird, so dass das Pumpenmodul wirksam und effektiv Flüssigkeit aus dem Flüssigkeitstank abpumpen kann, ohne dass Eis den Abpumpvorgang behindert. Der weitere Heizkörper und das Pumpenmodul sind insbesondere einstückig gebildet. Insbesondere ist das Pumpenmodul mit der Flüssigkeitstankschale verbunden und ist der weitere Heizkörper mit der Flüssigkeitstankschale verbunden.

In einer weiteren vorteilhaften Ausführungsform ist der Heizkörper als eine Platte oder als ein Zylinder, insbesondere mit abgerundeten Kanten, ausgebildet, wobei die Platte insbesondere als eine Schallwand zum Hemmen einer Flüssigkeitsbewegung in dem Flüssigkeitstank ausgebildet ist.

Dadurch wird beispielsweise der technische Vorteil erreicht, dass eine Platte bzw. Zylinder ein vorteilhafte geometrische Form aufweisen, um wirksam in dem Innenraum des Flüssigkeitstanks aufgenommen zu werden und ein entsprechend ausgeformter Heizkörper während des Betriebs wirksam Wärme an die Flüssigkeit abgeben kann. Wenn der Heizkörper als eine Platte ausgebildet ist, kann die Platte derart in dem Innenraum des Flüssigkeitstanks angeordnet werden, dass die Platte eine Schwallbewegung der Flüssigkeit in dem Flüssigkeitstank hemmt, wodurch gegebenenfalls auf weitere Schwallwände verzichtet werden kann.

In einer weiteren vorteilhaften Ausführungsform ist die Flüssigkeitstankschale durch eine untere Flüssigkeitstankhalbschale und eine obere Flüssigkeitstankhalbschale gebildet, wobei der Heizkörper an einer dem Innenraum des Flüssigkeitstanks zugewandten Innenwandung der oberen Flüssigkeitstankhalbschale angeordnet ist.

Dadurch wird beispielsweise der technische Vorteil erreicht, dass ein an der oberen Flüssigkeitstankschale angeordneter Heizkörper bei der Bildung von Eis in dem Flüssigkeitstank die Eisdecke durchbricht um wirksam einen Belüftungspfad durch die Eisdecke bereitzustellen.

In einer weiteren vorteilhaften Ausführungsform weist die Außenwandung des Heizkörpers eine erste Dicke auf und weist die Kunststoffhülle eine zweite Dicke auf, wobei die zweite Dicke geringer als die erste Dicke ist.

Dadurch wird beispielsweise der technische Vorteil erreicht, dass durch die geringe Dicke der Kunststoffhülle eine besonders wirksame Wärmeabgabe von dem Heizkörper an die Flüssigkeit in dem Flüssigkeitstank sichergestellt wird.

Ausführungsbeispiele der Erfindung sind in den Zeichnungen dargestellt und werden im Folgenden näher beschrieben.

Es zeigen:
- Fig. 1: eine schematische Ansicht eines Flüssigkeitstanks mit einem zylinderförmigen Heizkörper gemäß einer ersten Ausführungsform;
- Fig. 2: eine schematische Ansicht eines Flüssigkeitstanks mit einem plattenförmigen Heizkörper gemäß einer zweiten Ausführungsform;
- Fig. 3: eine schematische Ansicht eines Querschnitts durch einen zylinderförmigen Heizkörper gemäß der ersten Ausführungsform;
- Fig. 4: eine schematische Ansicht eines Querschnitts durch einen weiteren zylinderförmigen Heizkörper gemäß der ersten Ausführungsform; und
- Fig. 5: eine schematische Ansicht eines Querschnitts durch einen plattenförmigen Heizkörper gemäß der zweiten Ausführungsform.

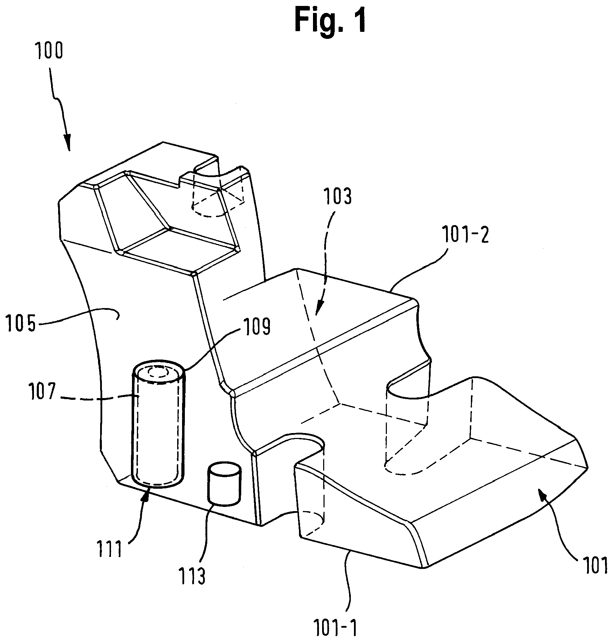

Fig. 1 zeigt eine schematische Ansicht eines Flüssigkeitstanks mit einem zylinderförmigen Heizkörper gemäß einer ersten Ausführungsform. Der Flüssigkeitstank 100 ist insbesondere als ein Harnstofftank zur Aufnahme von wässriger Harnstofflösung ausgebildet. Um die Emission von Stickoxiden beim Betrieb von Verbrennungsmotoren, insbesondere Dieselmotoren, in einem Kraftfahrzeug zu reduzieren, wird das Verfahren der selektiven katalytischen Reduktion (SCR) angewendet, wobei Harnstofflösung einem Abgasstrang des Kraftfahrzeugs zugeführt wird. Die bereitzustellende Harnstofflösung kann hierbei in dem Flüssigkeitstank 100 aufgenommen werden. Da der Gefrierpunkt der hierbei verwendeten Harnstofflösung bei ca. -11 °C liegt, muss die Harnstofflösung bei geringen Außentemperaturen im Flüssigkeitstank 100 beheizt werden, um ein Einfrieren der Harnstofflösung zu verhindern.

Der in Fig. 1 dargestellte Flüssigkeitstank 100 weist eine Flüssigkeitstankschale 101 auf, welche einen Innenraum 103 des Flüssigkeitstanks 100 umschließt, wobei die Flüssigkeitsschale 101 eine dem Innenraum 103 zugewandte Innenwandung 105 aufweist. Die Flüssigkeitstankschale 101 ist insbesondere aus Kunststoff gebildet, und ist beispielsweise ein Kunststoffformteil, das im Spritzgussverfahren hergestellt wird. Die Kunststoffe können beispielsweise Polyolefine wie Polyethylen oder Polypropylen, Polyamid und/oder Polyoxymethylen (POM), insbesondere hochdichtes Polyethylen (HDPE) umfassen.

In dem Innenraum 103 des Flüssigkeitstanks 100 ist ein Heizkörper 107 angeordnet, welcher ausgebildet ist, die in dem Flüssigkeitstank 100 aufgenommene Flüssigkeit, insbesondere wässrige Harnstofflösung, zu erwärmen. Hierbei ist der Heizkörper 107 mit der Flüssigkeitstankschale 101, insbesondere mit der Innenwandung 105 der Flüssigkeitstankschale 101, verbunden, insbesondere stoffschlüssig, formschlüssig und/oder kraftschlüssig verbunden. Der in Fig. 1 dargestellt Heizkörper 107 ist als ein Zylinder ausgebildet, welcher insbesondere abgerundete Kanten aufweist, und vertikal in dem Innenraum 103 des Flüssigkeitstanks 100 positioniert ist. Der Heizkörper 107 kann hierbei an einer unteren Flüssigkeitstankhalbschale 101-1 und/oder an einer oberen Flüssigkeitstankhalbschale 101-2 angeordnet sein.

Der Flüssigkeitstank 100 weist insbesondere eine Kunststoffhülle 109 auf, welche den Heizkörper 107 zumindest abschnittsweise umhüllt. Die Kunststoffe umfassen beispielsweise Polyolefine wie Polyethylen oder Polypropylen, Polyamid und/oder Polyoxymethylen (POM), insbesondere hochdichtes Polyethylen (HDPE). Der Kunststoff der Kunststoffhülle 109 kann mit dem Kunststoff der Flüssigkeitstankschale 101 identisch sein. Die Kunststoffhülle 109 kann mit der aus Kunststoff bestehenden Flüssigkeitstankschale 101, insbesondere der Innenwandung 105 der Flüssigkeitstankschale 101, stoffschlüssig verbunden, insbesondere verschweißt, sein. Hierdurch entsteht eine Verbindungsbrücke 111 zwischen der Kunststoffhülle 109 und der Flüssigkeitstankschale 101. Die Kunststoffhülle 109 und die Flüssigkeitstankschale 101 können hierbei insbesondere einstückig ausgebildet sein. Somit wird durch die Kunststoffhülle 109 eine besonders wirksame Fixierung des Heizkörpers 107 an der Flüssigkeitstankschale 101 sichergestellt.

Die Innenwandung 105 kann auch eine in Fig. 1 nicht dargestellte Aufnahmekontur zur Aufnahme des Heizkörpers 107 aufweisen, wobei die Aufnahmekontur insbesondere als eine Vertiefung oder als ein Hohlraum in der Innenwandung 105 gebildet ist. Hierbei kann der Heizkörper 107 insbesondere in die Aufnahmekontur einschnappen, um eine kraftschlüssige Verbindung zwischen dem Heizkörper 107 und der Aufnahmekontur zu bilden. Alternativ kann der Heizkörper 107 insbesondere in die Aufnahmekontur eingepasst werden, um eine formschlüssige Verbindung zwischen dem Heizkörper 107 und der Aufnahmekontur zu bilden.

Durch das Anordnen des Heizkörpers 107 in dem Innenraum 103 des Flüssigkeitstanks 100 kann ein wirksames Erwärmen der Flüssigkeit, insbesondere der wässrigen Harnstofflösung, in dem Flüssigkeitstank 100 sichergestellt werden. Hierbei kann die Größe und Heizleistung des Heizkörpers 107 an die Bauraumbeschränkungen im Flüssigkeitstank, bzw. an die erforderliche Heizleistung angepasst werden. Durch die Befestigung des Heizkörpers 107 an der Innenwandung 105 kann sichergestellt werden, dass die Flüssigkeitstankschale 101 vorteilhaft flüssigkeitsdicht ist und dass keine elektrischen Leitungen zur Versorgung des Heizkörpers 107 mit elektrischer Energie durch die Flüssigkeitstankschale 101 geführt werden müssen.

In dem Innenraum 103 des Flüssigkeitstanks 100 ist ein optionaler weiterer Heizkörper 113 angeordnet, welcher an einem in Fig. 1 nicht dargestellten Pumpenmodul angeordnet ist. Der weitere Heizkörper 113 ist ausgebildet, das Pumpenmodul und/oder die Flüssigkeitstankschale 101 zu erwärmen, so dass ein Gefrieren von wässriger Harnstofflösung in dem Pumpenmodul verhindert wird. Wenn die Heizleistung des Heizkörper 107 jedoch ausreichend ist, um das Harnstoff in dem Flüssigkeitstank 100 wirksam zu schmelzen, kann gegebenenfalls auf den optionalen weiteren Heizkörper 113 verzichtet werden.

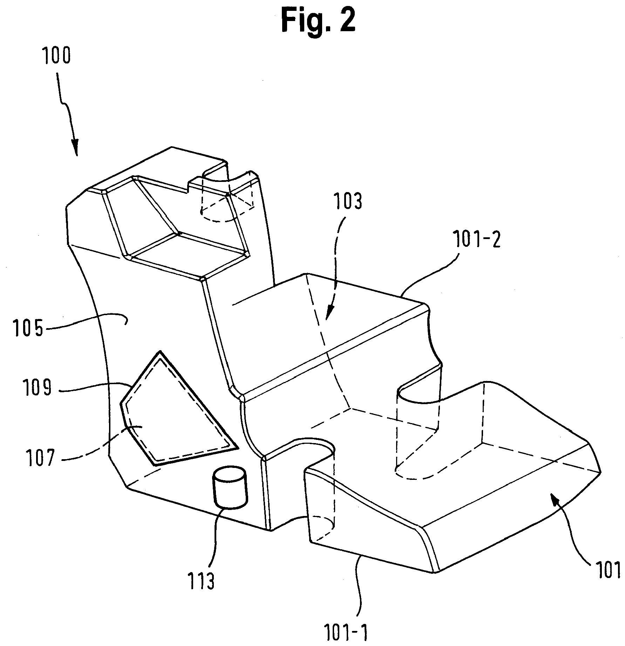

Fig. 2 zeigt eine schematische Ansicht eines Flüssigkeitstanks mit einem plattenförmigen Heizkörper gemäß einer zweiten Ausführungsform. Der in Fig. 2 dargestellte Flüssigkeitstank 100 gemäß der zweiten Ausführungsform entspricht dem in Fig. 1 dargestellten Flüssigkeitstank 100 gemäß der ersten Ausführungsform, bis darauf, dass der in Fig. 2 dargestellt Heizkörper 107 nicht als Zylinder, sondern als eine Platte mit abgerundeten Ecken ausgebildet ist. Ein als eine Platte ausgebildeter Heizkörper 107 kann vorteilhaft an eine Kontur der Innenwandung 105 des Flüssigkeitstanks 100 angepasst werden. Der als Platte ausgebildete Heizkörper 107 kann auch als Schwallwand ausgebildet sein, welche von der Innenwandung 105 aus in den Innenraum 103 des Flüssigkeitstanks 100 hervorsteht, und welche ausgebildet ist, eine Flüssigkeitsbewegung der Flüssigkeit in dem Flüssigkeitstank 100 zu hemmen.

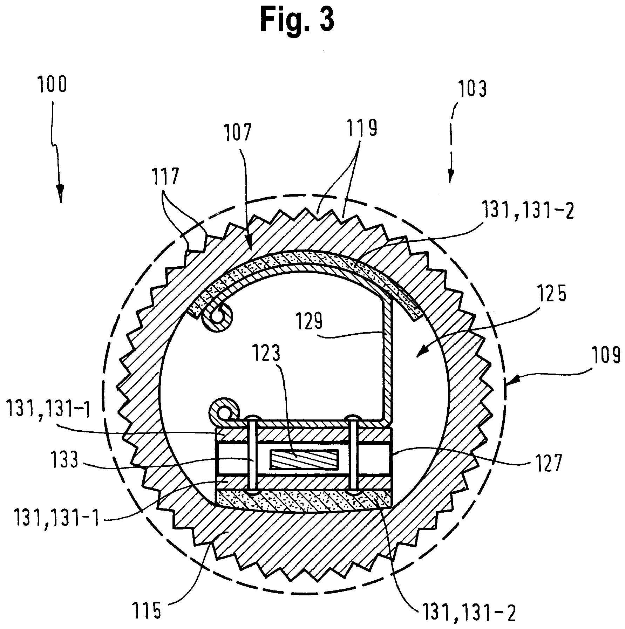

Fig. 3 zeigt eine schematische Ansicht eines Querschnitts durch einen zylinderförmigen Heizkörper gemäß der ersten Ausführungsform. Der Heizkörper 107 gemäß der in Fig. 1 dargestellten ersten Ausführungsform ist als ein Zylinder mit abgerundeten Kanten ausgebildet und weist im Querschnitt eine runde Form auf. Der Heizkörper 107 weist eine Außenwandung 115 auf, welche insbesondere aus Aluminium besteht, und welche insbesondere im Rahmen eines Strangpress- oder Stranggussverfahrens geformt wird. An der Außenwandung 115 ist eine Mehrzahl an Rippen 117 angeordnet, welche eine Mehrzahl an Rillen 119 begrenzen. Die Rillen 119 sind hierbei jeweils zwischen den Rippen 117 an der Außenwandung 115 angeordnet sind. Die Rillen 119 sind hierbei insbesondere ausgebildet, das Auftragen einer in Fig. 3 nur schematisch dargestellten Kunststoffhülle 109 auf die metallische Außenwandung 115 zu unterstützen. Wenn heiße Kunststoffschmelze auf die Außenwandung 115 aufgetragen wird, kann die Kunststoffschmelze vorteilhaft durch die Rillen 119 fließen, bevor die Kunststoffschmelze abkühlt und wirksam die Kunststoffhülle 109 ausbilden kann.

In dem Heizkörper 107 ist ein elektrisches Heizelement 123 angeordnet, welches ausgebildet ist, den Heizkörper 107 zu erwärmen. Das elektrische Heizelement 123 kann hierbei durch eine in Fig. 3 nicht dargestellt Heizkörperöffnung in einen durch die Außenwandung 115 begrenzenden Heizkörperinnenraum 125 eingeführt werden. Hierbei kann das elektrische Heizelement 123 insbesondere von einem Außenbereich des Flüssigkeitstanks 100 in den Heizkörperinnenraum 125 eingeführt werden. Die Heizkörperöffnung ist durch einen in Fig. 3 nicht dargestellten Heizkörperverschluss verschließbar, und wobei insbesondere an der Heizkörperöffnung und/oder an dem Heizkörperverschluss zumindest ein Isolationselement angeordnet ist, um eine wirksame Wärmedämmung zu ermöglichen.

Das elektrische Heizelement 123 ist hierbei als ein PTC (positive temperature coefficient)-Körper ausgebildet, welcher in einer Verschalung 127, insbesondere einer Kunststoffverschalung, aufgenommen ist. Der Heizkörper 107 weist hierbei ein Federelement 129 auf, welches insbesondere als eine Kunststoff,- oder Metallfeder ausgebildet ist, und welches ausgebildet ist, das elektrische Heizelement 123 mit Kraft zu beaufschlagen, um das elektrische Heizelement 123 gegen die Außenwandung 115 des Heizkörpers 107 zu drücken.

Durch das Federelement 129 kann somit sichergestellt werden, dass zwischen dem elektrischen Heizelement 123 und der Außenwandung 115 des Heizkörpers 107 keine Luftspalten verbleiben, welche eine Wärmeübertragung von dem elektrischen Heizelement 123 auf die Außenwandung 115 beeinträchtigen können.

In dem Heizkörper 107 sind Wärmeleitelemente 131 angeordnet, welche ausgebildet sind, eine wärmeleitende Verbindung zwischen dem elektrischen Heizelement 123 und der Außenwandung 115 bereitzustellen. Die Wärmeleitelemente 131 können Wärmeleitbleche 131-1, insbesondere aus Messing, Kupfer, oder Aluminium, umfassen, welche ausgebildet sind, Wärme wirksam von dem elektrischen Heizelement 123, insbesondere der Kunststoffverschalung 127 des elektrischen Heizelements 123, abzuführen. Die Wärmeleitelemente 131 können ferner Wärmeleitfolien 131-2 umfassen, welche ausgebildet sind, Wärme wirksam auf die Außenwandung 115 zu übertragen.

Hierbei drückt das Federelement 129 das elektrische Heizelement 123 zusammen mit den Wärmeleitelementen 131 gegen die Außenwandung 115 des Heizkörpers 107 und stellt somit eine wirksame Wärmeübertragung zwischen den Heizelementen 123 und der Außenwandung 115 bereit.

Eine Fixierung des Federelements 129 und der Wärmeleitelemente 131 innerhalb des Heizkörpers 107 kann hierbei durch Befestigungsmittel 133, insbesondere Nieten, erfolgen.

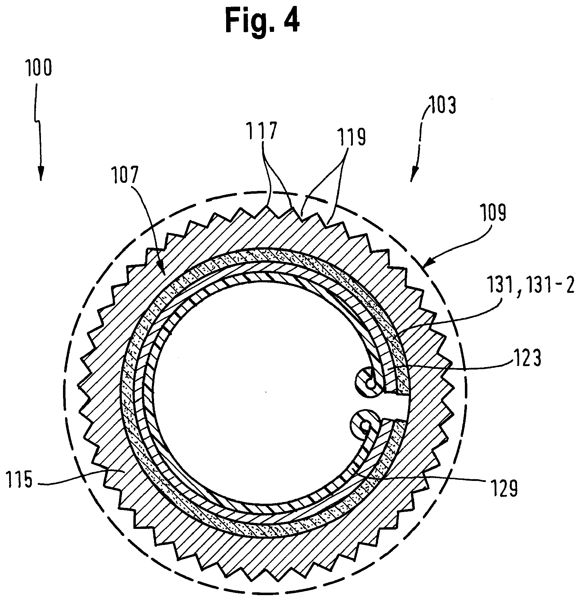

Fig. 4 zeigt eine schematische Ansicht eines Querschnitts durch einen weiteren zylinderförmigen Heizkörper gemäß der ersten Ausführungsform. Die Form des Heizkörpers 107 entspricht der in Fig. 1 dargestellten ersten Ausführungsform und ist als ein Zylinder mit abgerundeten Kanten ausgebildet und weist im Querschnitt eine runde Form auf. Eine Außenwandung 115 des Heizkörpers 107, weist eine Mehrzahl an Rippen 117 auf, welche eine Mehrzahl an Rillen 119 begrenzen, wobei eine Kunststoffhülle 109 in Fig. 4 nur schematisch dargestellt ist.

In dem Heizkörper 107 ist ein elektrisches Heizelement 123 angeordnet, welches gemäß dem Ausführungsbeispiel in Fig. 3 in den Heizkörper 107 eingeführt werden kann.

Das elektrische Heizelement 123 ist hierbei als eine PTC (positive temperature coefficient)-Folie ausgebildet. Der Heizkörper 107 weist ein Federelement 129 auf, welches insbesondere als eine Kunststoff,- oder Metallfeder ausgebildet ist, und welches ausgebildet ist, das elektrische Heizelement 123 mit Kraft zu beaufschlagen, um das elektrische Heizelement 123 gegen die Außenwandung 115 des Heizkörpers 107 zu drücken.

Durch das Federelement 129 kann somit sichergestellt werden, dass zwischen dem elektrischen Heizelement 123 und der Außenwandung 115 des Heizkörpers 107 keine Luftspalten verbleiben, welche eine Wärmeübertragung von dem elektrischen Heizelement 123 auf die Außenwandung 115 beeinträchtigen können.

In dem Heizkörper 107 sind Wärmeleitelemente 131 angeordnet, welche ausgebildet sind, eine wärmeleitende Verbindung zwischen dem elektrischen Heizelement 123 und der Außenwandung 115 bereitzustellen. Das in Fig. 4 dargestellte Wärmeleitelement 131 umfasst eine Wärmeleitfolie 131-2, welche ausgebildet ist, Wärme wirksam auf die Außenwandung 115 zu übertragen.

Hierbei drückt das Federelement 129 das elektrische Heizelement 123 zusammen mit der Wärmeleitfolie 131-2 gegen die Außenwandung 115 des Heizkörpers 107 und stellt somit eine wirksame Wärmeübertragung zwischen dem elektrische Heizelement 123 und der Außenwandung 115 bereit.

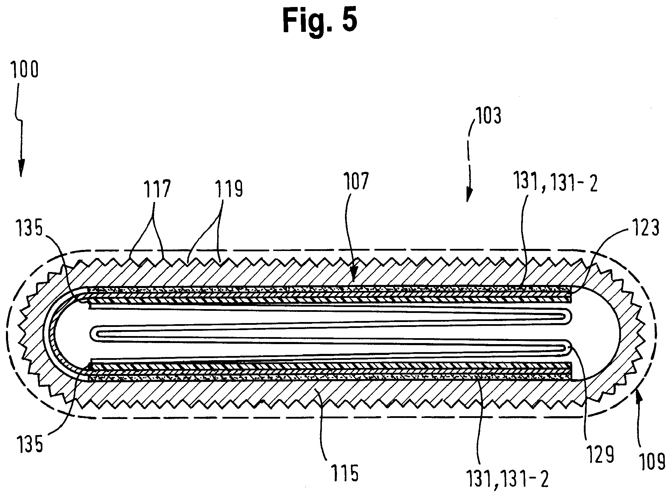

Fig. 5 zeigt eine schematische Ansicht eines Querschnitts durch einen plattenförmigen Heizkörper gemäß der zweiten Ausführungsform. Der Heizkörper 107 gemäß der in Fig. 2 dargestellten zweiten Ausführungsform ist als eine Platte mit abgerundeten Kanten ausgebildet und weist im Querschnitt eine annähernd rechteckige Form auf. Der Heizkörper 107 weist eine Außenwandung 115 auf, an welcher eine Mehrzahl an Rippen 117 angeordnet ist, welche eine Mehrzahl an Rillen 119 begrenzen. Eine Kunststoffhülle 109 welche mit der Außenwandung 115 verbunden ist, ist in Fig. 5 nur schematisch dargestellt.

In dem Heizkörper 107 ist ein elektrisches Heizelement 123 angeordnet, welches ausgebildet ist, den Heizkörper 107 zu erwärmen, und welches gemäß dem Ausführungsbeispiel in Fig. 3 in den Heizkörper 107 eingeführt werden kann.

Das elektrische Heizelement 123 ist hierbei als eine PTC (positive temperature coefficient)-Folie ausgebildet. Der Heizkörper 107 weist hierbei ein Federelement 129 auf, welches insbesondere als eine Kunststoff-, oder Metallfeder ausgebildet ist, und welches ausgebildet ist, das elektrische Heizelement 123 mit Kraft zu beaufschlagen, um das elektrische Heizelement 123 gegen die Außenwandung 115 des Heizkörpers 107 zu drücken.

Durch das Federelement 129 kann somit sichergestellt werden, dass zwischen dem elektrischen Heizelement 123 und der Außenwandung 115 des Heizkörpers 107 keine Luftspalten verbleiben, welche eine Wärmeübertragung von dem elektrischen Heizelement 123 auf die Außenwandung 115 beeinträchtigen können.

In dem Heizkörper 107 sind Wärmeleitelemente 131 angeordnet, welche ausgebildet sind, eine wärmeleitende Verbindung zwischen dem elektrischen Heizelement 123 und der Außenwandung 115 bereitzustellen. Die Wärmeleitelemente 131 können Wärmeleitfolien 131-2 umfassen, welche ausgebildet sind, Wärme wirksam auf die Außenwandung 115 zu übertragen.

Zwischen dem Federelement 129 und den elektrischen Heizelementen 123 ist jeweils eine Schutzplatte 135 aus Kunststoff angeordnet, welche ausgebildet das jeweilige elektrische Heizelement 123 vor mechanischer Beschädigung zu schützen.

Hierbei drückt das Federelement 129 das elektrische Heizelement 123 zusammen mit den Wärmeleitelementen 131 und den Schutzplatten 135 gegen die Außenwandung 115 des Heizkörpers 107 und stellt somit eine wirksame Wärmeübertragung zwischen dem Heizelementen 123 und der Außenwandung 115 bereit.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Flüssigkeitstank
- 101: Flüssigkeitstankschale
- 101-1: Untere Flüssigkeitstankhalbschale
- 101-2: Obere Flüssigkeitstankhalbschale
- 103: Innenraum des Flüssigkeitstanks
- 105: Innenwandung der Flüssigkeitstankschale
- 107: Heizkörper
- 109: Kunststoffhülle
- 111: Verbindungsbrücke
- 113: Weiterer Heizkörper
- 115: Außenwandung
- 117: Rippe
- 119: Rille
- 123: Elektrisches Heizelement
- 125: Heizkörperinnenraum
- 127: Verschalung
- 129: Federelement
- 131: Wärmeleitelement
- 131-1: Metallisches Wärmeleitblech
- 131-2: Wärmleitfolie
- 133: Befestigungsmittel
- 135: Schutzplatte

## Patentansprüche

1. Flüssigkeitstank (100) zur Aufnahme von Flüssigkeit in einem Kraftfahrzeug, mit:
einer Flüssigkeitstankschale (101), welche einen Innenraum (103) des Flüssigkeitstanks (100) umschließt;
einem Heizkörper (107), welcher in dem Innenraum (103) des Flüssigkeitstanks (100) angeordnet ist, und ausgebildet ist, die Flüssigkeit in dem Flüssigkeitstank (100) zu erwärmen; und
einer Kunststoffhülle (109), welche den Heizkörper (107) zumindest abschnittsweise umhüllt.

2. Flüssigkeitstank (100) nach Anspruch 1, wobei die Flüssigkeitstankschale (101) und die Kunststoffhülle (109) aus Kunststoff gebildet sind, und wobei die Kunststoffhülle (109) mit der Flüssigkeitstankschale (101) stoffschlüssig verbunden, insbesondere verschweißt, ist.

3. Flüssigkeitstank (100) nach Anspruch 1 oder 2, wobei die Kunststoffhülle (109) und die Flüssigkeitstankschale (101) einstückig ausgebildet sind.

4. Flüssigkeitstank (100) nach einem der vorangehenden Ansprüche, wobei der Heizkörper (107) eine Außenwandung (115), insbesondere eine metallische Außenwandung (115), aufweist, welche mit der Kunststoffhülle (109) verbunden, insbesondere stoffschlüssig verbunden, ist.

5. Flüssigkeitstank (100) nach Anspruch 4, wobei an der Außenwandung (115) eine Mehrzahl an Rippen (117) angeordnet sind, welche eine Mehrzahl an Rillen (119) an der Außenwandung (115) begrenzen, wobei die Rippen (117) und Rillen (119) eine wirksame Verbindung zwischen der Außenwandung (115) und der Kunststoffhülle (109) bereitzustellen.

6. Flüssigkeitstank (100) nach einem der vorangehenden Ansprüche, wobei eine dem Innenraum (103) des Flüssigkeitstanks (100) zugewandte Innenwandung (105) der Flüssigkeitstankschale (101) eine Aufnahmekontur aufweist, welche ausgebildet ist, den Heizkörper (107) aufzunehmen, wobei die Aufnahmekontur insbesondere als eine Vertiefung oder als ein Hohlraum in der Innenwandung (105) ausgebildet ist.

7. Flüssigkeitstank (100) nach Anspruch 6, wobei der Heizkörper (107) in die Aufnahmekontur einschnappbar oder einpressbar ist, wobei durch das Einschnappen oder Einpressen des Heizkörpers (107) in die Aufnahmekontur eine kraftschlüssige und/oder formschlüssige Verbindung zwischen dem Heizkörper (107) und der Aufnahmekontur gebildet wird.

8. Flüssigkeitstank (100) nach einem der vorangehenden Ansprüche, wobei der Heizkörper (107) ein elektrisches Heizelement (123) zum Erwärmen des Heizkörpers (107) aufweist, und wobei das elektrische Heizelement (123) insbesondere ein elektrisches Widerstandsheizelement, einen PTC-Körper oder eine PTC-Folie umfasst.

9. Flüssigkeitstank (100) nach Anspruch 8, wobei der Heizkörper (107) einen Heizkörperinnenraum (125) aufweist, welcher ausgebildet ist das elektrische Heizelement (123) aufzunehmen, wobei das elektrische Heizelement (123) durch eine Heizkörperöffnung des Heizkörpers (107) in den Heizkörperinnenraum (125) einführbar ist, um das elektrische Heizelement (123) in dem Heizkörper (107) zu positionieren, wobei die Heizkörperöffnung insbesondere einen Außenbereich des Flüssigkeitstanks (100) mit dem Heizkörperinnenraum (125) verbindet, wobei die Heizkörperöffnung durch einen Heizkörperverschluss verschließbar ist, und wobei insbesondere an der Heizkörperöffnung und/oder an dem Heizkörperverschluss zumindest ein Isolationselement angeordnet ist.

10. Flüssigkeitstank (100) nach Anspruch 8 oder 9, wobei der Heizkörper (107) ein Federelement (129) aufweist, welches ausgebildet ist, das elektrische Heizelement (123) mit Kraft zu beaufschlagen, um das elektrische Heizelement (123) an eine Außenwandung (115) des Heizkörpers (107) zu drücken.

11. Flüssigkeitstank (100) nach einem der Ansprüche 8 bis 10, wobei der Heizkörper (107) zumindest ein Wärmeleitelement (131) aufweist, um eine wärmeleitende Verbindung zwischen dem elektrischen Heizelement (123) und einer Außenwandung (115) des Heizkörpers (107) bereitzustellen, und wobei das Wärmeleitelement (131) insbesondere ein Wärmeleitblech (131-1) oder eine Wärmleitfolie (131-2) umfasst.

12. Flüssigkeitstank (100) nach Anspruch 11, wobei der Heizkörper (107) ein Wärmeleitmedium aufweist, welches zwischen dem elektrischen Heizelement (123) und dem Wärmeleitelement (131) angeordnet ist, um eine wärmeleitende Verbindung zwischen dem elektrischen Heizelement (123) und der Außenwandung (115) des Heizkörpers (107) bereitzustellen, und wobei das Wärmeleitmedium insbesondere eine Wärmeleitfolie, eine Wärmeleitflüssigkeit oder eine Wärmeleitpaste umfasst.

13. Flüssigkeitstank (100) nach einem der vorangehenden Ansprüche, wobei der Flüssigkeitstanks ein Pumpenmodul zum Abpumpen von Flüssigkeit aus dem Flüssigkeitstank (100) aufweist, wobei das Pumpenmodul im Innenraum (103) des Flüssigkeitstanks (100) angeordnet ist, und wobei das Pumpenmodul einen weiterer Heizkörper (113) zum Erwärmen des Pumpenmoduls und/oder der Flüssigkeitstankschale (101) aufweist

14. Flüssigkeitstank (100) nach einem der vorangehenden Ansprüche, wobei der Heizkörper (107) als eine Platte oder als ein Zylinder, insbesondere mit abgerundeten Kanten, ausgebildet ist, wobei die Platte insbesondere als eine Schallwand zum Hemmen einer Flüssigkeitsbewegung in dem Flüssigkeitstank (100) ausgebildet ist.

15. Flüssigkeitstank (100) nach einem der vorangehenden Ansprüche, wobei die Flüssigkeitstankschale (101) durch eine untere Flüssigkeitstankhalbschale (101-1) und eine obere Flüssigkeitstankhalbschale (101-2) gebildet ist, und wobei der Heizkörper (107) an einer dem Innenraum (103) des Flüssigkeitstanks (100) zugewandten Innenwandung (105) der oberen Flüssigkeitstankhalbschale angeordnet ist.
